# EUROPEAN PATENT SPECIFICATION

(11) **EP 0 490 400 B1**
(45) Date of publication and mention of the grant of the patent: **17.04.1996**
(21) Application number: 91121413.8
(22) Date of filing: 13.12.1991
(51) Int. Cl.: G11B 20/10, G11B 20/18

(54) **Information storage apparatus**
Gerät zum Speichern von Information
Appareil à mémoriser de l'information

(30) Priority: 14.12.1990 JP 402317/90
(43) Date of publication of application: 17.06.1992
(73) Proprietor: MATSUSHITA ELECTRIC INDUSTRIAL CO., LTD., Kadoma-shi, Osaka-fu, 571 (JP)
(72) Inventor: Nakamura, Yoshimitsu, Kadoma-shi, Osaka-fu (JP); Kagamibashi, Syunji, Neyagawa-shi, Osaka-fu (JP); Matsuo, Yasunobu, Takatsuki-shi, Osaka-fu (JP); Hasegawa, Shoji, Hirakata-shi, Osaka-fu (JP)
(74) Representative: Eisenführ, Speiser & Partner

(56) References cited:
- EP-A- 0 271 335
- EP-A- 0 383 298
- DE-A- 3 611 561
- US-A- 4 800 550

## Description

### BACKGROUND OF THE INVENTION

### 1. Field of the Invention

The present invention relates to an information storage apparatus and, more particularly, to an information storage apparatus for use in a digital data storage apparatus.

### 2. Description of the Prior Art

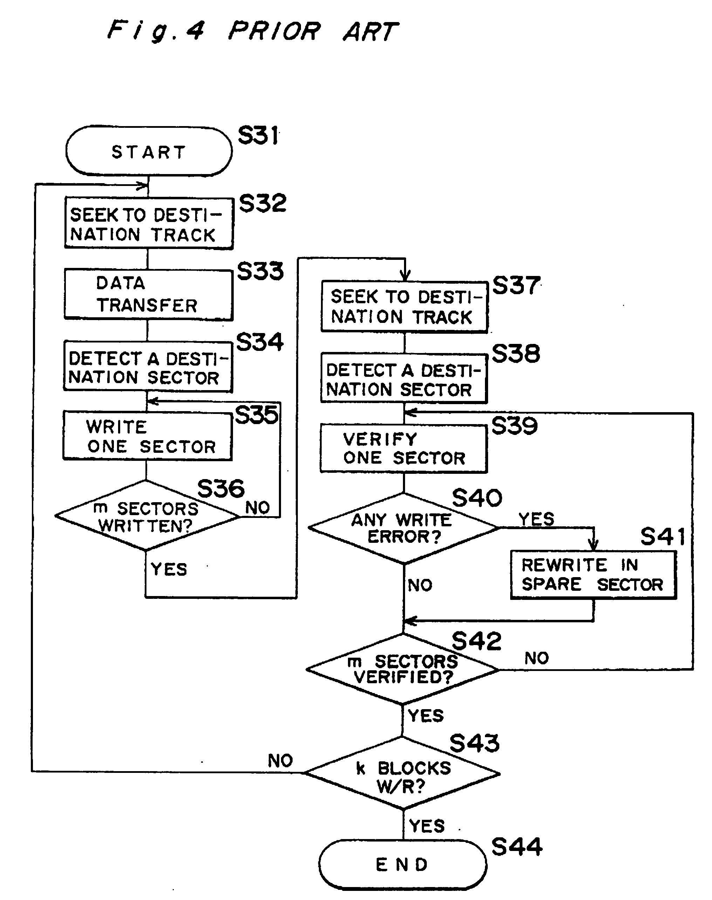

In Fig. 4, the write-and-verify operation of a conventional information storage apparatus is shown. In this information storage apparatus, after receipt of a write-and-verify (W/V) command which requires a post-inspection of the written data from the main control device such as a host computer, the control unit controls a read-and-write (R/W) head to move (seek) to the destination track at step S32.

At step S33, the original data representing the original information is transferred to a data buffer through an I/O unit.

The control unit further controls so that the R/W head confronts the destination sector in the destination track at step 34.

At steps S35 and S36, "m" number of sectors are written with the original data from the data/buffer. The R/W head may be shifted a number of tracks away from the destination track.

Next, at step 37, the R/W head seeks again to the destination track, and the destination sector is detected at S38.

After the detection of the destination sector, the original data that has been stored in the destination sector is read for verification of the written data at step S39.

At step S40, when it is judged that the data written on the verified sector is in error, a portion of the original data that should be written on that sector is re-written to another sector. The supply of the original data to another sector is effected by the data buffer.

At step S42, when it is judged that "m" number of sectors are not verified yet, the operation returns to step S39 and repeats the operations at steps S39, S41, and S42 until when "m" number of sectors are verified.

Further, at step S43, until when whole of the original data ("k" blocks of sectors) is written, it is judged as "No" and then the operations returns step S32. After step s43, the operation according to the W/V command terminates.

Recently, a disk-shaped recording medium such as a floppy disk or a hard disk which stores data magnetically or an optical disk which stores data optically has been commercialized.

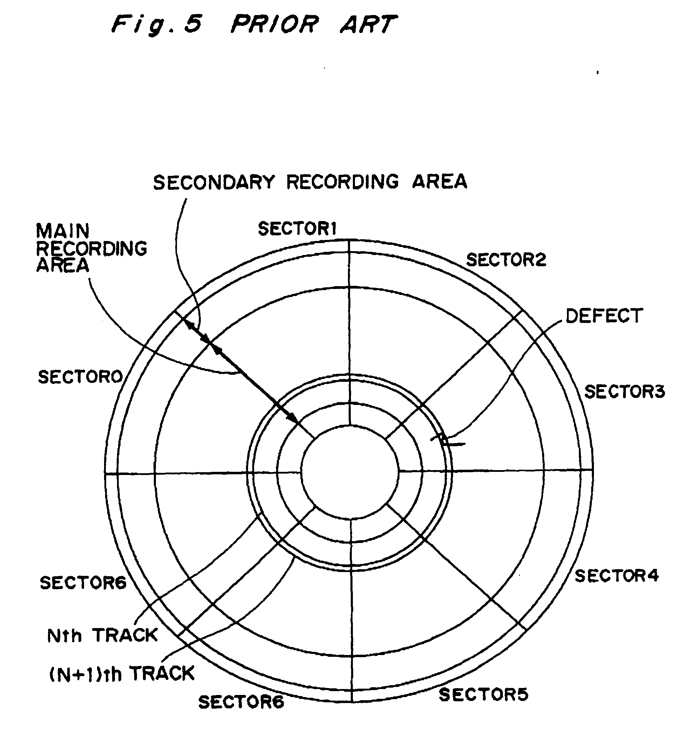

In Fig. 5, an optical disk, for example, is shown. The optical disk is logically formatted so as to have a plurality of circular tracks defined by a plurality of concentric circles. Furthermore, each of tracks is also divided into some arch shaped portions defined by a plurality of diametrical lines equally spaced to each other. In this optical disk, the outer circumferential portion is a secondary recording area for use by the system and the inner circumference portion is a main recording area for storing the original information data.

However, such an optical disk (including another disk shaped medium) is likely to have physical or functional defects elongating over plural sectors or tracks. In this case, the defect extends over the Nth and (N+1)th tracks within the main recording area.

According to the conventional data storage apparatus described above, when the optical disk of Fig. 5 is subject to W/V operation, the data write error is detected at the sectors 3 at the Nth and (N+1)th tracks, which sectors are regarded as defect sectors. At every time of verification of that sectors, the R/W head moves between the Nth and (N+1)th tracks and the secondary recording area for rewriting the original data corresponding such defect sectors to the secondary recording area.

This movement of the R/W head during the verification takes much time and reduces the processing speed of the W/R operation.

An information data storage apparatus according to the preamble of Claim 1 is known from EP-A-0 383 298.

### SUMMARY OF THE INVENTION

The present invention has been developed with a view to substantially solving the above described disadvantages and has for its essential object to provide an improved information storage apparatus.

In order to achieve the aforementioned objective, an information data storage apparatus for storing one or more blocks of information data, each block having a plurality of sections, on a recording medium having first and second recording areas, which apparatus comprises a first data storing means for storing the information data in sections, a write/read means for writing and reading the information data on and from the recording medium, an defect detection means for detecting a writing defect within the data written on the recording medium and for nominating a section that has a writing error as a defect section, a second data storing means for storing identification data representing the defect sections, and a control means for controlling the write/read means such that the write/read means is moved to the first recording area for recording at least one block of the information data, and that the write/read means is moved to the second recording area for sequentially recording the information data of the defect sections as identified by the second data storing means, a further comprises
a defect number detecting means (step S21) for detecting the number of defect sections stored in said second data storing means (9);
wherein said control means (6) controls said write/read means (2) to move to said second recording area after said detected defect section number becomes greater than a predetermined number.

These and other objects and features of the present invention will become clear from the following description taken in conjunction with the preferred embodiments thereof with reference to the accompanying drawings throughout which like parts are designated by like reference numerals, and in which:
Fig. 1 is a block diagram of an information storage apparatus according to the present invention;
Fig. 2 is a flow chart showing a write-and-verify (W/V) operation according to the present invention;
Fig. 3 is a flow chart showing a write-and-verify (W/V) operation according to the present invention;
Fig. 4 is a flow chart showing a write-and-verify (W/V) operation according to the conventional information storage apparatus; and
Fig. 5 is an illustration of assistance in explaining an example of disc shaped recording medium having an defect in the recording area.

### DETAILED DESCRIPTION OF THE PREFERRED EMBODIMENTS

### First embodiment

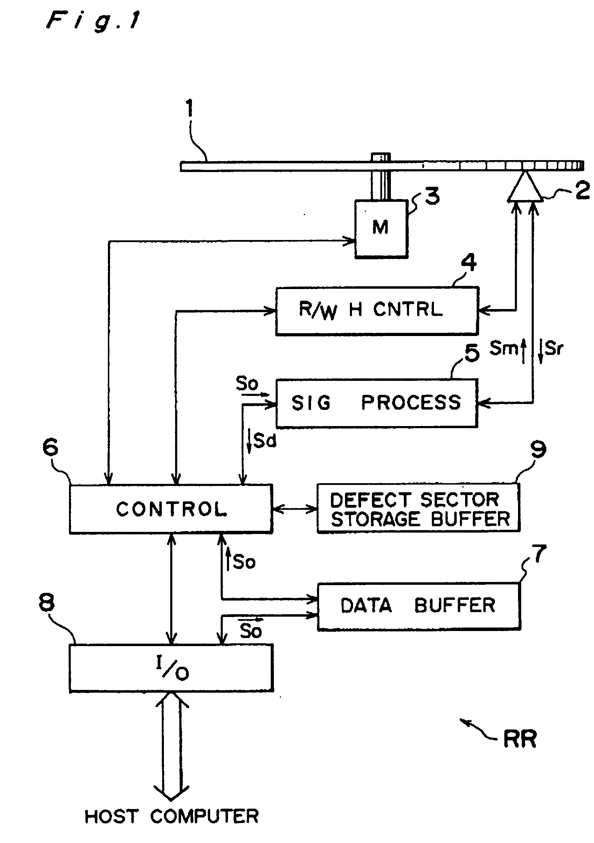

Referring to Fig. 1, an information storage apparatus RR according to a first embodiment is shown. A disk-shaped recording medium 1 for storing information is rotatably supported by a motor 3. The motor 3 is connected to a control unit 6.

A read-and-write head 2 (R/W head) is arranged to oppose a surface of the recording medium 1 so as to write information in the form of modulated signal Sm carrying the original information thereto and to read the written information to produce a reproduced signal Sr therefrom. The R/W head 2 is connected to a R/W head control unit 4 which controls the movement of the R/W head 2.

The R/W head 2 receives and sends the read-and-write signals to a signal processing unit 5 which produces the modulated signal Sm based on original signal So indicative of original information, and the demodulated signal Sd based on the reproduced signal Sr.

Furthermore, R/W head control unit 4 and signal processing unit 5 are respectively connected to the control unit 6 which controls the motor 3, R/W head control unit 4, and signal processing unit 5. The control unit 6 is further connected to a data buffer 7 which temporarily stores the original signal So, a defect sector storage buffer 9 which temporarily stores the data representing defect sector of the recording medium 1, and an interface unit 8 which communicates with the host computer (not shown). The data buffer storage 7 is also connected to the interface unit 8, through which the information storage apparatus RR is connected to the host computer.

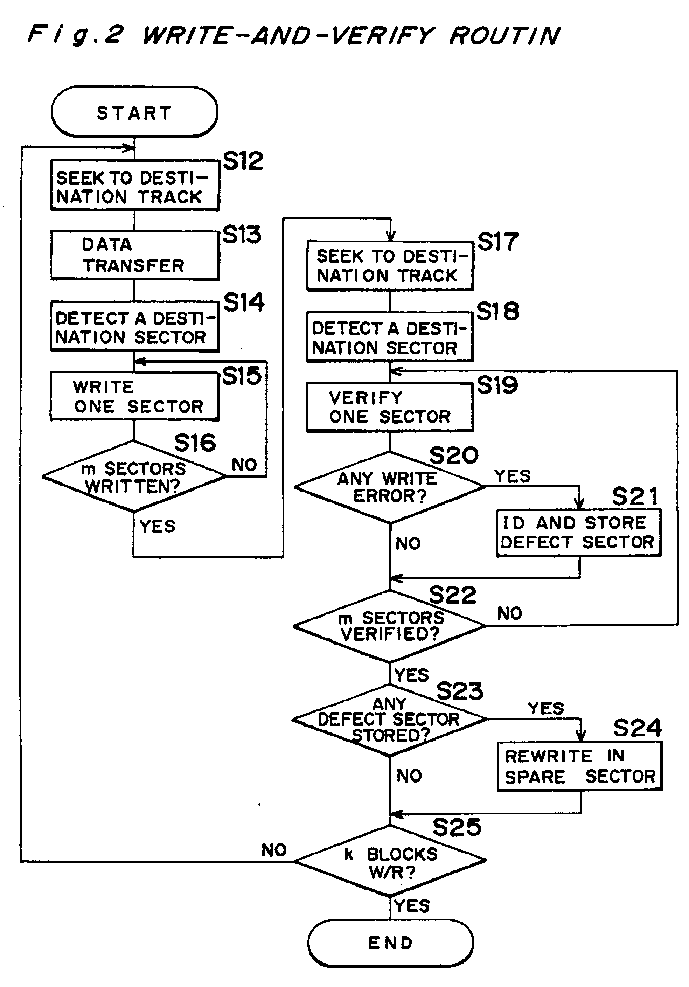

Referring to Fig. 2, a data write-and-verify (W/R) operation of the information storage apparatus RR according to a first preferred embodiment of the present invention is described. As the recording medium 1, for example, an optical disk used for storing information or data optically is employed. The optical disk is physically formatted by the known art so as to have a main recording area and a secondary recording area, as shown in Fig. 5. It is to be noted that any recording medium other than optical disk suitable for storing the data such as a magnetic disk, a magnetic card, or a magnetic tape may be employed as the recording medium 1.

First, when the control unit 6 receive a write-and-verify (W/V) command from the host computer through the interface unit 8, the write-and-verify (W/V) routine shown in Fig. 2 starts. The W/V command is the instruction for the storage apparatus RR to write a data indicative of the original information on the surface of the recording medium 1 and then to read the written data to ensure that the data is written properly.

At step S12, the control unit 6 produces a signal for actuating the R/W head 2 to move or seek to the destination track within a main recording area of the recording medium 1. The main recording area is used for writing information data, as described above. Then the operation advances to step S13.

At step S13, the control unit 6 receives an original signal So representing original information transmitted from the host computer through the interface unit 8 and then transmits the received original signal So to the data buffer storage 7, in which the transmitted original signal So is stored. Then, the operation advances to step S14.

At step S14, when the R/W head 2 confronts a destination sector to be written, a signal indicative of detection of the destination sector is produced. Then, the operation advances to step S15.

At step S15, the original signal So corresponding to one sector is taken out from the data buffer storage 7 and is modulated by the signal processing unit 5 to signal Sm. Based on such modulated signal Sm, the first sector of "m" sectors is written by the information. It is to be noted that "m" is an integer and is determined according to the capacity of the data buffer storage 7. Then, the operation advances to step S16.

At step S16, it is judged whether "m" sectors are written, or not. When it is judged "NO", the operation returns to step S15 to write the next sector in a similar manner to that described above.

At step S17, the R/W head 2 moves back to the track which is the same track as that accessed at step S12. Then, the operation advances to step S18.

AT step S18, R/W head 2 again accesses the sector which is the same sector as that accessed at step S15. Then, the operation advances to step S19.

At step S19, the data recorded in the destination sector is read out by the R/W head 2 to obtain a reproduced data Sr. The read data is verified in a known manner to detect whether or not the read data contains an error. One example of the verification is explained below. Based on the error correcting code included the reproduced data Sr, the error bytes of the read sector are detected. When the detected error bytes are beyond the half of error correcting capacity of the error correcting code, it is judged that verify error has occurred on the read sector.

Next, at step S20, according to the result of the verification at step S19, it is judged whether or not any write error has occurred on the verified sector. When it is judged that the verified sector has an error, the verified sector, which is regarded as a defect sector, is registered at step S21. The registration of the defect sector is carried out by storing the address of the defect sector in the defect sector storage buffer 9. Then, the operation advances to step S22.

when it is judged as "No" at step S20, meaning that the data in the verified sector is properly written, without any error, the operation advances to step S22.

At step S22, it is judged whether all of "m" sectors are verified, or not. When it is judged "NO", the operation returns to step S19 to verify the next sector.

At step S23, it is judged whether the defect sector storage buffer 9 has any sector address stored therein, or not. If "Yes", the operation advances to step S24.

At step S24, the addresses stored in the defect sector storage buffer 9 are read out sequentially. Each time the address representing the defect sector is read out, the original data that should be stored in the defect sector is fetched from the data buffer 7 and is stored in a spare sector in the secondary recording area of the recording medium 1. After such rewriting the original data to the substitution sectors in the secondary recording area, the addresses stored in the defect registration buffer storage 9 are deleted.

Furthermore, when it is judged as "No" at step S23, meaning that no data writing error occurred, the operation advances to step S25.

At step S25, it is judged whether the above operation (Steps S12 to S25) is carried out for "k" blocks (one block containing "m" sectors), or not. After step S25, the routine terminates.

In the embodiment described above, the sector number "m" contained in one block is selected, for example, to be between 20 to 100. If the defect sector occurs at a rate of 10 percent, there will be about 2 to 10 defect sectors. Even with such a plurality of defect sectors, all it is necessary, is to make one movement to rewrite the data that should be written in the defect sectors in the substitution sectors in the secondary recording area.

Thus, the actual time for writing/reproducing the information on and from the recording medium 1 is substantially reduced. Such an arrangement is known from EP-A-0 383 298

### Embodiment of the invention

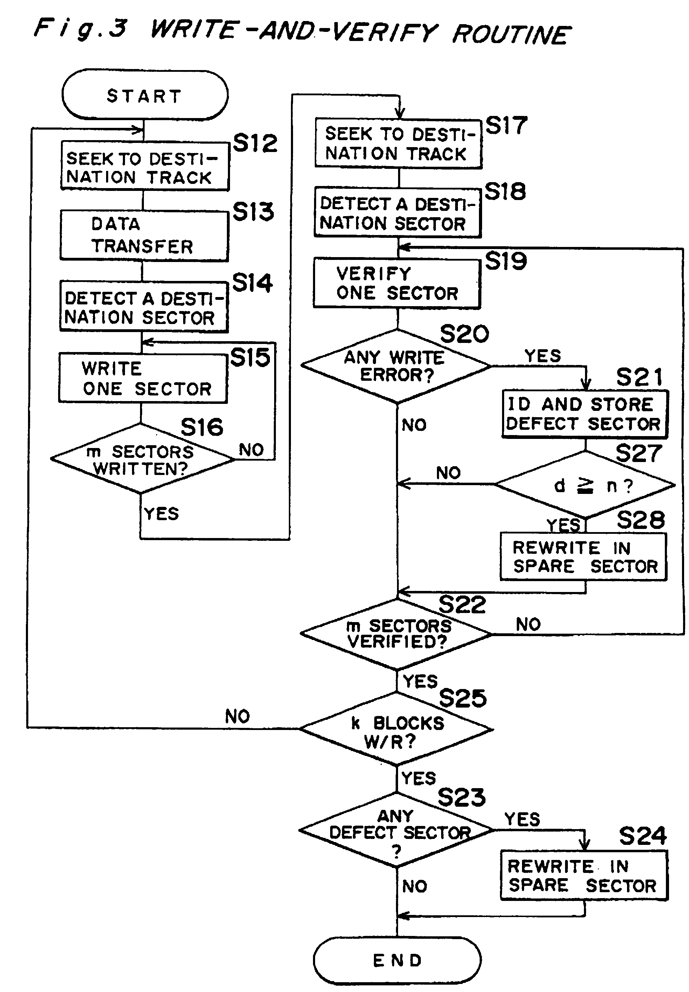

Referring to Fig. 3, a flow chart of an embodiment of the present invention is shown. When compared with the flow chart of Fig. 2, steps S27 and S28 are inserted after step S21, and step S25 is shifted between steps S22 and S23. At step S27, it is detected whether or not the number "d", representing the number of defect sectors as stored in the defect registration buffer storage 9, is greater than a predetermined number "n" which is selected to be a relatively great number and is determined according to the capacity of the defect registration buffer storage 9. At step S28, the data that should be stored in the defect sectors are stored in the substitute sectors, as in a manner similar to step S24.

In operation, during the recording of one block containing "m" sectors (which is through steps S12 to S22), the addresses of the defect sectors are stored in defect registration buffer storage 9. If the number of addresses stored in defect registration buffer storage 9 is less than "n", which is likely to happen, the recording of the next block takes place without rewriting the data of the defect sectors in the substitute sectors, i.e., without passing through step S28. Then, after repeating the steps S12 to S22 for a number of blocks and when the number of addresses stored in defect registration buffer storage 9 becomes equal to "n", step S28 takes place to rewrite the data of "n" defect sectors in "n" substitute sectors.

During the recording of the last block, it may happen that the number of addresses stored in defect registration buffer storage 9 is less than "n". In this case, the operation proceeds through steps S27, S22, S25 to step S23. Since there are a number of addresses of the defect sectors still remaining in defect registration buffer storage 9, the program goes to step S24 to rewrite the data of defect sectors in the substitute sectors.

According to the invention, it is not always necessary to proceed the rewrite step S28 in each one-block recording. The rewrite step S28 may take place once after a number of blocks are recorded. Thus, the time for writing/reproducing the information on and from the recording medium 1 is more reduced when compared with the prior art.

Although the present invention is described with reference to the optical disk, the present invention is also applicable to any other information storage apparatus which uses any recording medium suitable for data storage such as the magnetic disk, card, or tape.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An information data storage apparatus (RR) for storing one or more blocks of information data, each block having a plurality of sections, on a recording medium (1) having first and second recording areas, said apparatus comprising:
a first data storing means (7) for storing said information data in sections;
a write/read means (2) for writing and reading said information data on and from said recording medium (1);
a defect detection means for detecting a writing defect within the data written on said recording medium and for nominating a section that has a writing error as a defect section;
a second data storing means (9) for storing identification data representing the defect sections; and
a control means (6) for controlling said write/read means (2) such that said write/read means (2) is moved to said first recording area for recording at least one block of said information data, and that said write/read means (2) is moved to said second recording area for sequentially recording the information data of the defect sections as identified by said second data storing means (9),
**characterized by**
a defect number detecting means (step S21) for detecting the number of defect sections stored in said second data storing means (9);
wherein said control means (6) controls said write/read means (2) to move to said second recording area after said detected defect section number becomes greater than a predetermined number.

## Patentansprüche

1. Informationsdatenspeichervorrichtung (RR) zum Speichern von einem oder mehreren Blöcken von Informationsdaten, wobei jeder Block mehrere Sektionen aufweist, auf einem Aufzeichnungsmedium (1) mit ersten und zweiten Aufzeichnungsbereichen, mit:
einer ersten Datenspeichereinrichtung (7) zum Speichern der Informationsdaten in Sektionen;
einer Schreib/Lese-Einrichtung (2) zum Schreiben und Lesen der Informationsdaten auf das und von dem Aufzeichnungsmedium (1);
einer Defekt-Erfassungs-Einrichtung zum Erfassen eines Schreibfehlers in den auf das Aufzeichnungsmedium geschriebenen Daten und zum Bezeichnen einer Sektion, die einen Schreibfehler aufweist, als defekte Sektion;
einer zweiten Datenspeichereinrichtung (9) zum Speichern von Identifikationsdaten, welche die defekten Sektionen darstellen; und
einer Steuerungseinrichtung (6) zum Steuern der Schreib/Lese-Einrichtung (2), so daß die Schreib/Lese-Einrichtung (2) in den ersten Aufzeichnungsbereich zum Aufzeichnen von wenigstens einem Block der Informationsdaten bewegt wird,
und daß die Schreib/Lese-Einrichtung (2) in den zweiten Aufzeichnungsbereich bewegt wird zum sequentiellen Aufzeichnen der Informationsdaten der defekten Sektionen, wie sie durch die zweite Datenspeichereinrichtung (9) identifiziert sind,
gekennzeichnet durch
eine Defekt-Anzahl-Erfassungseinrichtung (Schritt S21) zum Erfassen der Anzahl der in der zweiten Datenspeichereinrichtung (9) gespeicherten defekten Sektionen;
wobei die Steuerungseinrichtung (6) die Schreib/Lese-Einrichtung (2) so steuert, daß sie sich zu dem zweiten Aufzeichnungsbereich bewegt, nachdem die erfaßte Defekt-Sektions-Anzahl größer als eine vorbestimmte Anzahl geworden ist.

## Revendications

1. Appareil de stockage de données d'information (RR) pour stocker un ou plusieurs blocs de données d'information, chaque bloc comportant une pluralité de sections, sur un support d'enregistrement (1) comportant des première et seconde zones d'enregistrement, ledit appareil comprenant :
un premier moyen de stockage de données (7) pour stocker lesdites données d'information dans des sections ;
un moyen d'écriture/lecture (2) pour écrire et lire lesdites données d'information sur ledit support d'enregistrement (1) ;
un moyen de détection de défaut pour détecter un défaut d'écriture dans les données écrites sur ledit support d'enregistrement et pour désigner une section qui comporte une erreur d'écriture en tant que section défectueuse ;
un second moyen de stockage de données (9) pour stocker des données d'identification représentant les sections défectueuses ; et
un moyen de commande (6) pour commander ledit moyen d'écriture/lecture (2) de telle sorte que ledit moyen d'écriture/lecture (2) soit déplacé jusqu'à ladite première zone d'enregistrement pour enregistrer au moins un bloc desdites données d'information et de telle sorte que ledit moyen d'écriture/lecture (2) soit déplacé jusqu'à ladite seconde zone d'enregistrement pour enregistrer séquentiellement les données d'information des sections défectueuses telles qu'identifiées par ledit second moyen de stockage de données (9),
caractérisé par :
un moyen de détection de. nombre de défauts (étape S21) pour détecter le nombre de sections défectueuses stockées dans ledit second moyen de stockage de données (9) ;
dans lequel ledit moyen de commande (6) commande ledit moyen d'écriture/lecture (2) pour le déplacer jusqu'à ladite seconde zone d'enregistrement après que ledit nombre de sections défectueuses détectées devient supérieur à un nombre prédéterminé.
